# FASCICULE DE BREVET EUROPEEN

(11) **EP 0 644 411 B1**
(45) Date de publication et mention de la délivrance du brevet: **26.03.1997**
(21) Numéro de dépôt: 94401959.5
(22) Date de dépôt: 02.09.1994
(51) Int. Cl.: G01M 11/02

(54) **Procédé de mesure absolue de la structure géométrique ou optique d'un composant optique et dispositif pour sa mise en oeuvre**
Verfahren und Gerät zur absoluten Messung der geometrischen oder optischen Struktur eines optischen Bestandteiles
Procedure and apparatus for the absolute measurement of the geometrical or optical structure of an optical component

(30) Priorité: 17.09.1993 FR 9311136; 04.05.1994 FR 9405464
(43) Date de publication de la demande: 22.03.1995
(73) Titulaire: ESSILOR INTERNATIONAL (Compagnie Générale d'Optique), F-94028 Créteil Cédex (FR)
(72) Inventeur: Le Saux, Gilles, F-75012 Paris (FR); Bertrand, Patrick, F-92130 Issy-Les-Moulineaux (FR); Lippens, Xavier, F-75012 Paris (FR); Lafay, Christophe, F-75013 Paris (FR)
(74) Mandataire: Hirsch, Marc-Roger

(56) Documents cités:
- FR-A- 2 647 912
- FR-A- 2 647 913

## Description

La présente invention a pour objet un procédé de mesure absolue de la structure géométrique ou optique d'un composant optique. Elle a aussi pour objet un dispositif pour la mise en oeuvre de ce procédé.

Le procédé selon l'invention permet de mesurer de façon absolue une surface polie ou la répartition d'indice d'un composant optique.

La mesure de surfaces polies et/ou de répartitions d'indice est susceptible de nombreuses applications industrielles. Elle est notamment utile dans le domaine ophtalmique pour le contrôle ou la mesure de lentilles ophtalmiques. Elle est aussi susceptible d'être appliquée au contrôle ou à la mesure de moules, par exemple pour la fabrication de lentilles ophtalmiques.

Pour le contrôle d'un composant optique, il a déjà été proposé de mettre en oeuvre le test de Ronchi et de procéder par détection de phase.

Ainsi qu'on le sait, le test de Ronchi consiste à interposer, sur l'onde lumineuse issue du composant optique à contrôler, au point de convergence de celle-ci, un réseau de traits parallèles alternativement opaques et transparents, et à analyser le composant de franges alors observables en aval.

Ces franges qui, à s'en tenir aux seules lois de l'optique géométrique, sans prise en considération des phénomènes de diffraction traduisent la direction des rayons lumineux constitutifs de l'onde concernée et sont caractéristiques des aberrations de cette onde.

Elles traduisent, en effet, en terme de pente, l'écart entre la surface d'onde correspondante et une surface d'onde sphérique dont le centre de courbure est situé dans le plan du réseau.

Il suffit, dès lors, de mesurer cette pente en tout point du composant optique à contrôler, en pratique par la technique de détection de phase, puis de procéder à une intégration, pour retrouver les défauts de surface.

Un dispositif optique permettant la mise en oeuvre d'un tel processus se trouve notamment décrit dans l'article "Fringe Scanning Ronchi test for aspherical surfaces", de la revue "APPLIED OPTICS", volume 23, numéro 20, du 15 octobre 1984, ainsi que dans l'article "Phase measuring Ronchi test", de cette même revue, volume 27, numéro 3, du 1er février 1988. Globalement, ce dispositif optique comporte, suivant un axe optique, des moyens d'émission propres à la constitution d'une source lumineuse ponctuelle cohérente, un poste d'attente propre à la réception du composant optique à contrôler, un réseau de Ronchi, des moyens de réception propres à la réception de l'image observable en aval de ce réseau de Ronchi, et des moyens informatiques de traitement propres à l'exploitation de cette image par détection de phase.

D'autres dispositifs de contrôle d'un composant optique ont été proposés. Ainsi, il a été proposé d'utiliser deux réseaux de Ronchi, sensiblement parallèles associés, et d'étudier les franges de moiré obtenues sur un écran par réflexion ou transmission de lumière cohérente sur la surface à étudier.

De façon analogue au test de Ronchi, les figures de moiré obtenues traduisent les écarts, en terme de pente, entre une surface d'onde théorique plane et la surface d'onde obtenue par réflexion ou transmission sur la surface à analyser.

Un dispositif optique utilisant ce principe est décrit par exemple dans l'article "Moiré Deflectometry - Ray Tracing Interferometry", de I. Glatt et O. Kafri, publié dans Optics and Lasers in Engineering 8 (1988), pages 277 à 320. Un tel dispositif comprend typiquement une source de lumière collimatée, qui est transmise ou réfléchie par la surface à analyser, vers une paire de réseaux de Ronchi, l'image se projetant sur un écran dépoli.

Une analyse qualitative des figures de moiré obtenues, par rapport aux figures attendues, permet de repérer la présence d'aberrations. Le déplacement relatif des réseaux permet une mesure quantitative et un calcul des variations de la surface d'onde mesurée par rapport à la surface d'onde théorique plane.

Enfin, dans le dispositif décrit dans les brevets français n° 2 647912 et 2 647913, on détermine la carte des pentes de la surface réelle à mesurer au moyen d'un procédé de déflectométrie par détection de phase. En soustrayant à cette carte des pentes de la surface réelle la carte de pentes de la surface théorique nominale, on obtient de façon simple la carte des pentes des défauts, ce qui permet de reconstituer par intégration la surface réelle. Ce dispositif connu, s'il permet avec une grande précision un contrôle d'une lentille ophtalmique connue, ou plus généralement d'une surface connue, présente l'inconvénient d'être limité à une mesure des écarts entre une surface réelle et une surface théorique. Autrement dit, il met en oeuvre un procédé relatif, qui implique la connaissance préalable de la forme théorique de la surface à mesurer.

La présente invention propose un procédé de mesure de la structure géométrique ou optique d'un composant optique qui permet une mesure absolue, car il n'implique pas de connaître au préalable la forme théorique de la surface ou la répartition théorique de l'indice. Le procédé permet de déterminer la forme géométrique d'une surface ou la répartition d'indice dans un composant optique.

La présente invention propose aussi un dispositif qui permet, avec une grande précision, la mise en oeuvre de ce procédé de mesure de la structure géométrique ou optique.

L'invention permet une mesure absolue de la structure géométrique d'une surface, soit en transmission, soit en réflexion, pour des surfaces convexes ou concaves. Elle permet de mesurer avec précision la forme réelle de la surface.

L'invention permet également une mesure absolue de la répartition d'indice d'un composant optique à gradient d'indice, c'est-à-dire d'un composant constitué d'un matériau à indice de réfraction variable délimité par deux dioptres connus.

Selon l'invention, le procédé de mesure absolue de la structure géométrique ou optique d'un composant optique comprend les étapes consistant à :
- éclairer ledit composant optique par une lumière incidente, dont le front d'onde est connu,
- mesurer dans un plan donné les cartes de pentes du front d'onde de ladite lumière après réflexion sur ledit composant optique ou transmission par ledit composant optique,
et comporte en outre au moins une procédure de calcul consistant à déduire de ladite mesure des cartes de pentes la structure géométrique ou optique dudit composant optique.

Pour mesurer les cartes de pentes du front d'onde de ladite lumière après réflexion sur ledit composant optique ou transmission par ledit composant optique, l'invention propose de déterminer, par une méthode déflectométrique, les trajets d'une pluralité de rayons de ladite lumière dans un espace image du composant optique à mesurer.

Par méthode déflectométrique, on entend toute méthode donnant accès aux pentes des rayons lumineux.

Ces méthodes appartiennent à trois catégories:
- les méthodes dites "géométriques", par interposition d'un masque dans le faisceau (Foucault, Ronchi, Hartman, etc...);
- les méthodes par Moiré (Moiré déflectométrie, interférométrie Talbot, etc...);
- les méthodes interférométriques différentielles (latérales, radiales, etc...).

De telles méthodes sont décrites dans l'ouvrage de D. Malacra:"Optical Shop Testing", Ed. Wiley.

Avantageusement, on transporte ensuite ces rayons, par des techniques de calcul optique classiques, dans l'espace du composant optique que l'on mesure.

Ladite procédure de calcul peut, quant à elle, être réalisée suivant deux modes de mise en oeuvre.

Dans un premier mode de mise en oeuvre du procédé, l'invention permet la mesure absolue de la structure géométrique ou optique du composant à mesurer.

D'une part, l'invention permet alors la mesure absolue de la structure géométrique d'une surface du composant optique à mesurer, et ladite procédure de calcul comprend:
- une étape d'initialisation d'une surface résultat par une surface de départ simple S_{D},
- au moins une étape d'optimisation, impliquant:
   - un calcul de la valeur d'une fonction de mérite représentative des variations induites par le remplacement de la surface du composant optique à mesurer par ladite surface résultat, et
   - une minimisation de ladite valeur, en faisant varier ladite surface résultat, variation qui s'exprime sous forme d'au moins une surface intermédiaire S_{I}.

Avantageusement, ladite surface résultat, ladite surface simple S_{D} et la ou lesdites surfaces intermédiaires S_{I} sont représentées par une combinaison linéaire d'une famille de fonctions orthogonales.

Cette mesure absolue de la surface permet alors, entre autres, de calculer en chaque point les caractéristiques principales de cette surface, par exemple les altitudes, les pentes, les courbures principales locales, etc...

D'autre part, l'invention permet dans ce premier mode de mise en oeuvre la mesure absolue de la structure optique du composant optique à mesurer, i.e. la mesure de la répartition d'indice d'un composant optique à gradient d'indice, c'est-à-dire d'un composant constitué d'un matériau à indice variable délimité par deux dioptres connus. Ladite procédure de calcul comprend alors:
- une étape d'initialisation d'une répartition d'indice résultat par une répartition d'indice de départ simple N_{D},
- au moins une étape d'optimisation, impliquant:
   - un calcul de la valeur d'une fonction de mérite représentative des variations induites par le remplacement de la répartition d'indice du composant optique à mesurer par ladite répartition d'indice résultat, et
   - une minimisation de ladite valeur, en faisant varier ladite répartition d'indice résultat, variation qui s'exprime sous forme d'au moins une répartition d'indice intermédiaire N_{I}.

Avantageusement, ladite répartition d'indice résultat, ladite répartition d'indice de départ simple N_{D} et la ou lesdites répartitions d'indice intermédiaires N_{I} sont représentées par une combinaison linéaire d'une famille de fonctions orthogonales.

Dans ce premier mode de mise en oeuvre du procédé, on peut prévoir une pluralité d'étapes d'optimisation.

Les fonctions orthogonales peuvent être des polynomes, et dans ce cas, le degré maximum des polynomes de ladite combinaison linéaire dans une étape d'optimisation peut être supérieur ou égal au degré maximum des polynomes de ladite combinaison dans l'étape d'optimisation précédente.

La minimisation de la valeur de la fonction de mérite peut s'effectuer par la méthode des moindres carrés.

Le calcul de la valeur de la fonction de mérite peut s'effectuer: - en calculant, pour chaque rayon d'une pluralité de rayons de ladite lumière, après réflexion sur ledit composant optique ou transmission par ledit composant optique,
- le rayon lumineux incident, qui, en arrivant sur ladite surface résultat ou ladite répartition d'indice résultat calculée lors du processus d'optimisation, serait réfléchi ou transmis dans la direction du rayon mesuré,
- dans le plan de la source ponctuelle ou dans un plan conjugué de ce plan, la distance entre le point d'impact dudit rayon incident dans ce plan et le centre de la source ponctuelle,
   - en additionnant, pour ladite pluralité de rayons, le carré de la distance ainsi calculée pour chacun des rayons.

Dans un deuxième mode de mise en oeuvre du procédé, l'invention permet de déterminer les caractéristiques d'une surface du composant optique à analyser sous forme de cartes de courbures principales de ladite surface. Dans ce mode de mise en oeuvre du procédé, la procédure de calcul comprend:
- une étape de calcul des dérivées, dans plusieurs directions, des cartes de pentes du front d'onde de la lumière après réflexion sur ledit composant optique ou transmission par ledit composant optique.
- une étape de calcul à partir desdites dérivées, des courbures du front d'onde de la lumière après réflexion sur ledit composant optique ou transmission par ledit composant optique,
- une étape de calcul d'une carte des courbures principales de la surface du composant optique à mesurer, à partir des courbures ainsi calculées, et connaissant le front d'onde de la lumière incidente sur le composant optique.

L'invention a aussi pour objet un dispositif pour la mise en oeuvre du procédé de mesure absolue d'une surface ou d'une répartition d'indice, comprenant:
- des moyens d'éclairage du composant optique à mesurer par une lumière dont le front d'onde est connu,
- des moyens de support du composant optique à mesurer,
qui comprend en outre:
- des moyens de mesure des pentes du front d'onde de ladite lumière après réflexion sur ledit composant optique ou transmission par ledit composant optique, et
- des moyens de calcul susceptibles de recevoir les résultats desdits moyens de mesure.

Selon un mode de réalisation du dispositif, lesdits moyens de mesure comprennent un réseau de Ronchi, un écran dépoli et une caméra CCD; dans un autre mode de réalisation, les moyens de mesure comprennent un réseau de Ronchi et une caméra CCD.

Dans un mode de réalisation les moyens d'éclairage du composant optique à mesurer comprennent une source quasi-ponctuelle et un système d'imagerie de cette source.

Les moyens de calcul comprennent un programme de tracé de rayons.

On prévoit aussi dans le dispositif un rayon laser matérialisant l'axe optique du dispositif.

Enfin, les moyens de support sont avantageusement susceptibles de se déplacer le long de l'axe optique du dispositif, ou dans un plan orthogonal à celui-ci.

Les caractéristiques et avantages de la présente invention apparaîtront mieux à la description qui suit de divers modes de réalisation de l'invention, donnés à titre d'exemples, et en référence aux dessins annexés, qui montrent:
- figure 1, un schéma de principe d'un dispositif selon l'invention, pour la mesure en transmission d'une surface polie;
- figure 2, un schéma de principe d'un dispositif selon l'invention, pour la mesure en réflexion d'une surface polie;
- figure 3, un schéma plus détaillé d'un mode de réalisation d'un dispositif du type de celui de la figure 1;
- figure 4, un schéma plus détaillé d'un mode de réalisation d'un dispositif du type de celui de la figure 2, pour la mesure en réflexion de surfaces convexes;
- figure 5, un schéma plus détaillé d'un mode de réalisation d'un dispositif du type de celui de la figure 2, pour la mesure en réflexion de surfaces concaves;

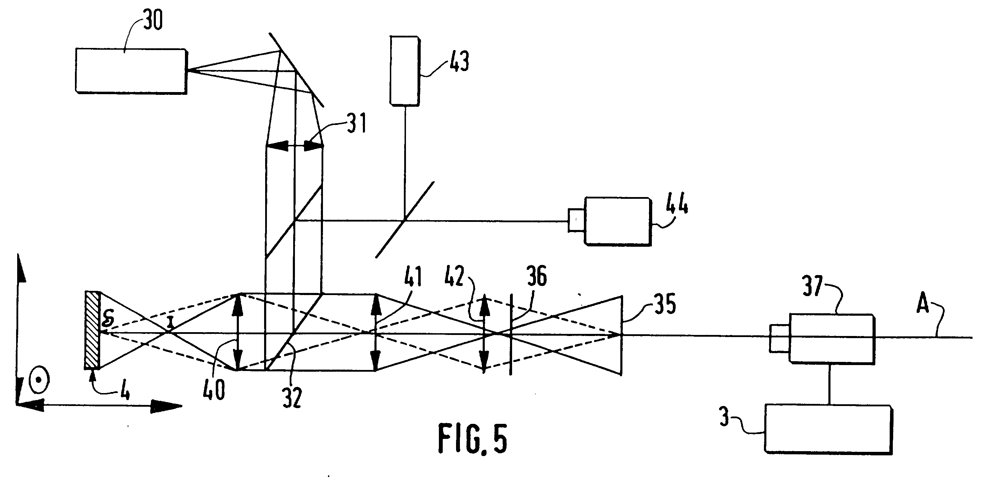

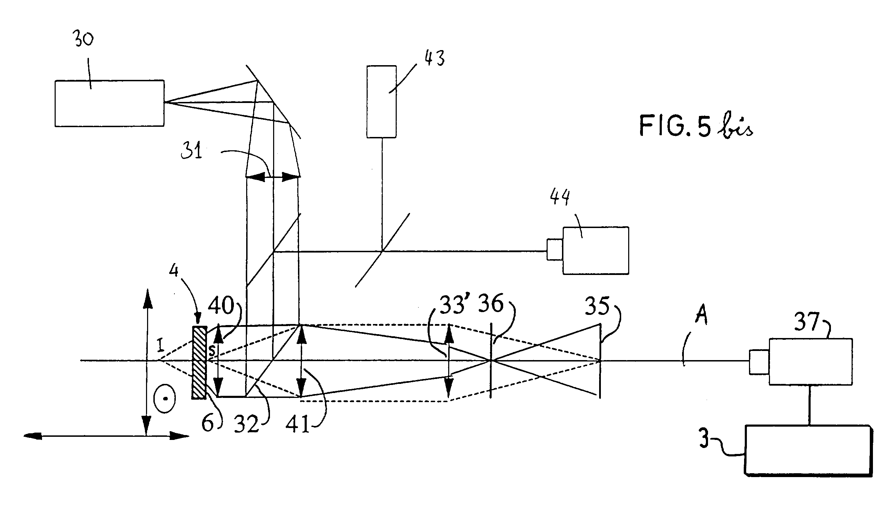

- figure 5bis, un schéma plus détaillé d'un mode de réalisation d'un dispositif du type de celui de la figure 5, mais pour la mesure en réflexion de surfaces convexes;

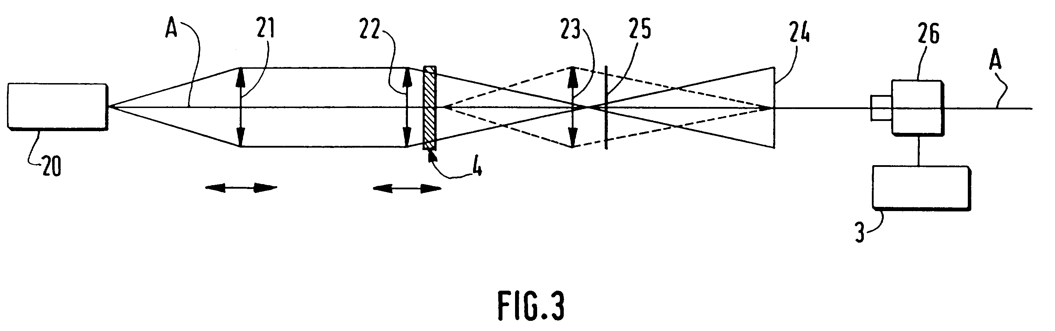

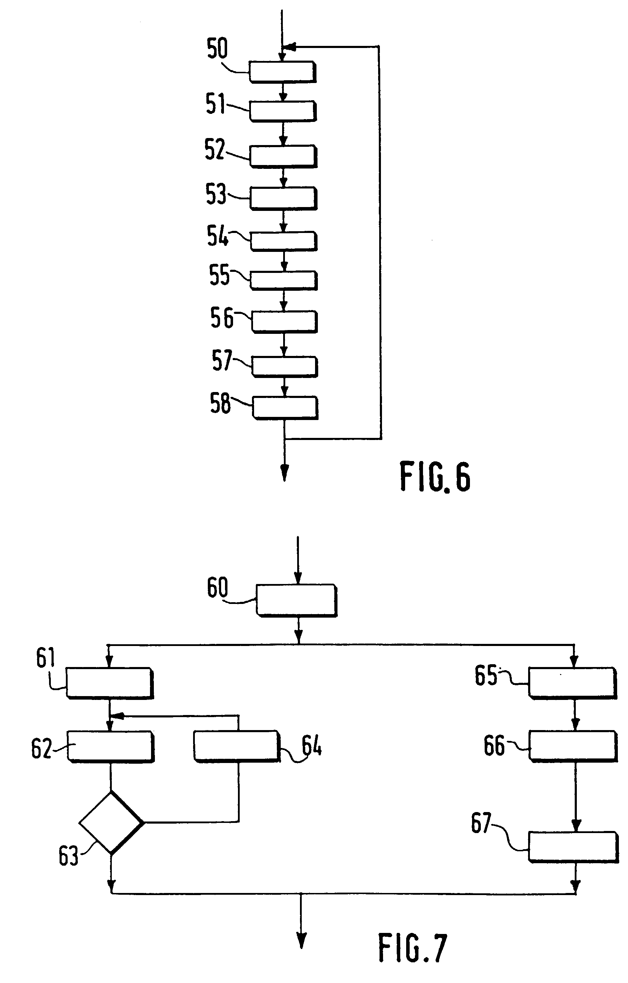

- figure 6, un ordinogramme des étapes d'une mesure complète d'une surface polie, dans un dispositif du type de celui de la figure 3, 4 ou 5;
- figure 7, un ordinogramme des étapes de calcul, dans un mode de mise en oeuvre du procédé selon l'invention.

La description qui suit est donnée dans le cadre de la mesure absolue de la structure géométrique d'une surface polie. Elle s'étend mutatis mutandis au procédé de mesure de la répartition d'indice d'un composant optique à gradient d'indice, c'est-à-dire d'un composant constitué d'un matériau à indice variable délimité par deux dioptres connus.

Il suffit de remplacer l'inconnue "surface" S définie par z(x,y) par l'inconnue "répartition d'indice" n(x,y).

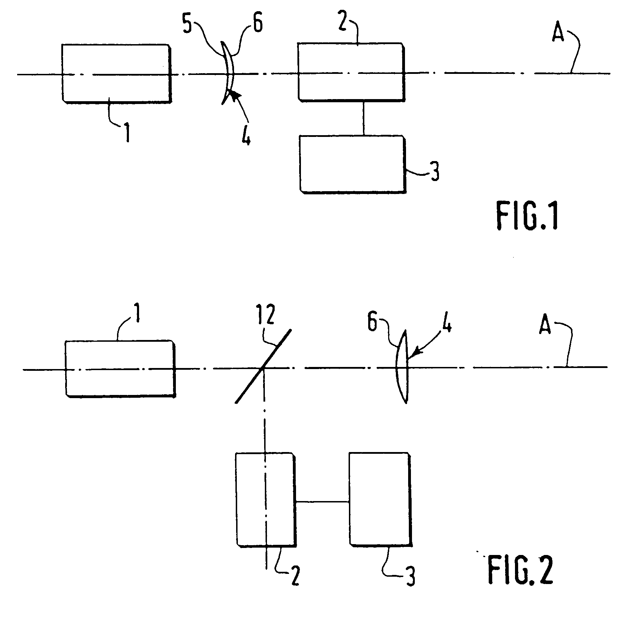

Le procédé de mesure s'effectue alors en transmission exclusivement, par exemple à l'aide d'un dispositif du type de ceux décrits ci-dessous en référence aux figures 1 et 3; la connaissance de la forme géométrique des dioptres et de l'épaisseur dudit composant optique permet de mesurer sa répartition d'indice n(x,y).

L'étape d'initialisation est réalisée avec une répartition d'indice simple de départ N_{D} d'indice constant.

La figure 1 montre un schéma de principe d'un dispositif selon l'invention, pour la mesure en transmission d'une surface polie. Par mesure, on entend la détermination des caractéristiques géométriques de la surface polie, telles que sa forme géométrique ou une carte de ses courbures principales. Par surface polie, il faut entendre une face inconnue d'un composant optique, tel que par exemple un verre progressif. Pour un tel verre, dont on connaît la forme d'une face et l'indice, il est intéressant de pouvoir analyser de façon absolue les caractéristiques de l'autre face. Par mesure en transmission, on entend une mesure de la surface polie par mesure de la lumière transmise à travers le composant optique, et en particulier à travers la surface polie à mesurer. On a représenté à la figure 1 un dispositif selon l'invention, qui comprend, le long d'un axe optique A, des moyens d'éclairage 1, des moyens de support non représentés et des moyens de mesure 2. Le dispositif comprend en outre des moyens de calcul 3. Les moyens de support non représentés sont susceptibles de recevoir un composant optique dont une surface est à analyser, et qui dans l'exemple de la figure 1, est constitué d'un verre progressif 4. Une face 5 de ce verre 4 présente une forme et une position dans le montage, également connues, et on désire déterminer de façon absolue les caractéristiques de la deuxième face 6 du verre 4. L'indice du verre progressif 4 ainsi que son épaisseur en un point donné sont supposés connus.

Les moyens d'éclairage 1 émettent vers le verre 4 une lumière dont le front d'onde présente une forme connue. Cette lumière traverse le verre 4 et est transmise aux moyens de mesure 2. Les moyens de mesure 2 sont reliés aux moyens de calcul 3 et déterminent les cartes de pentes du front d'onde de la lumière après transmission par la surface polie 6 à mesurer. Cette détermination se fait dans le plan image du composant optique en cours de mesure.

Comme la forme du front d'onde incident sur la face 5 du verre 4 est connue, et comme la forme de cette face 5 ainsi que l'indice du verre 4 sont aussi connus, il est possible de déterminer, grâce aux moyens de calcul 3, la forme du front d'onde de la lumière incidente sur la surface polie 6 à mesurer. Selon l'invention, la lumière transmise à travers la surface polie 6 est ensuite reçue par les moyens de mesure 2 qui, en combinaison avec les moyens de calcul 3, déterminent les cartes de pentes du front d'onde de la lumière après transmission à travers la surface polie 6.

Les moyens de calcul 3 permettent de déduire de la mesure de ces pentes les caractéristiques absolues de la surface 6 à mesurer, comme expliqué en référence aux figures 6 et 7.

Le schéma de principe de la figure 1 convient également pour la mesure de la répartition d'indice d'un composant optique.

La figure 2 montre un schéma de principe d'un dispositif selon l'invention, pour la mesure en réflexion d'une surface polie. Par mesure en réflexion, on entend une mesure des caractéristiques de la surface polie 6 par mesure de la lumière réfléchie par cette surface. Le dispositif de la figure 2 présente, le long d'un axe optique A, des moyens d'éclairage 1, des moyens de séparation 12, des moyens de support non représentés susceptibles de recevoir le composant optique 4 présentant la surface à mesurer 6. La lumière émise par les moyens d'éclairage 1 est transmise par les moyens de séparation 12 vers la surface 6; elle est réfléchie par ladite surface vers les moyens de séparation 12, qui l'envoient vers des moyens de mesure 2 analogues à ceux de la figure 1. Le dispositif de la figure 2 comprend en outre des moyens de calcul 3 analogues à ceux de la figure 1.

Le dispositif de la figure 2 permet une mesure par réflexion d'une surface polie 6, de la façon suivante. Les moyens d'éclairage 1 émettent vers la surface 6, et à travers les moyens de séparation 12, une lumière dont le front d'onde présente une forme connue. Cette lumière est réfléchie par la surface 6, et par les moyens de séparation 12 vers les moyens de mesure 2. Ceux-ci, comme dans le dispositif décrit en référence à la figure 1, déterminent les cartes de pentes du front d'onde de la lumière dans le plan image, puis, grâce aux moyens de calcul 3, les cartes de pentes du front d'onde de la lumière après réflexion sur la surface polie 6 à mesurer.

Les moyens de calcul 3 permettent de déduire de ces cartes de pentes les caractéristiques absolues de la surface 6 à mesurer, comme expliqué en référence aux figures 6 et 7.

La figure 3 montre un schéma plus détaillé d'un mode de réalisation d'un dispositif de mesure en transmission d'un composant optique, du type de celui représenté à la figure 1. Dans l'exemple de la figure 3, le composant optique est constitué d'un verre progressif 4 présentant une surface à mesurer. Le dispositif de la figure 3 comprend, le long d'un axe optique A, des moyens d'éclairage constitués d'une source quasi-ponctuelle 20, une optique 21 montée mobile le long de l'axe A, et une optique de focalisation 22. L'optique mobile 21 est ajustée à une position le long de l'axe A selon l'addition de puissance du verre à mesurer. L'optique de focalisation 22 présente une focale positive ou négative, de façon à pouvoir analyser des verres de puissance positive ou négative. Ainsi, dans le cas d'une mesure de verres progressifs, la focale de l'optique 22 sera positive ou négative, selon le signe de la puissance du verre progressif dans sa zone de vision de loin. Le dispositif de la figure 3 comprend ensuite, le long de l'axe A, les moyens de support du composant optique à mesurer 4. Les moyens de mesure, disposés ensuite le long de l'axe optique A, comprennent une optique 23 qui forme l'image du composant 4 sur un écran dépoli 24. Cette optique 23 est suivie d'un réseau de Ronchi 25, de type connu, qui lui est accolé. L'image formée à travers le réseau de Ronchi sur l'écran dépoli 24 est reprise par une caméra 26, du type caméra mosaïque. Cette caméra est par exemple une caméra à dispositif de couplage de charge (CCD) susceptible de mesurer l'intensité lumineuse en une pluralité de points de l'écran dépoli. La caméra 26 est ainsi susceptible de fournir aux moyens de calcul 3 les informations d'intensité lumineuse en tout point de l'écran dépoli. Elle peut en outre fournir à l'opérateur, sur un moniteur vidéo, une image du dépoli pour le suivi de la mesure. Dans un autre mode de réalisation de l'invention, l'image du composant 4 formée par l'optique 23 est directement filmée par la caméra 26, sans l'intermédiaire d'un écran dépoli.

Les différentes étapes de mesure de la structure géométrique de la surface polie dans le dispositif de la figure 3 sont décrites plus en détail en référence à la figure 6.

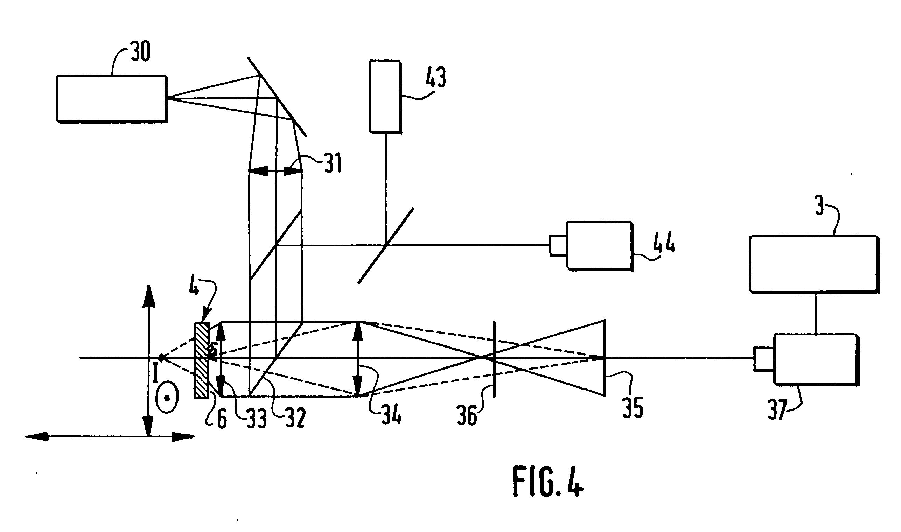

La figure 4 montre un schéma plus détaillé d'un mode de réalisation d'un dispositif de mesure en réflexion des caractéristiques géométriques d'un composant optique 4, du type de celui représenté à la figure 2. Le dispositif de la figure 4 est adapté à la mesure de surfaces convexes. Le dispositif de la figure 4 comprend une source 30 quasi-ponctuelle, placée au foyer d'une optique de focalisation 31, qui génère un faisceau collimaté. Ce faisceau collimaté traverse un séparateur 32 et un adaptateur 33, dont la puissance dépend de la puissance de la surface polie 6 du composant optique 4 à mesurer. L'adaptateur 33 éclaire la surface 6 de la pièce 4 placée au point S par une lumière dont le front d'onde est connu. Le point I de la figure 4 est le conjugué optique du point source 30. La puissance de l'adaptateur 33 est choisie en fonction de la puissance de la surface à mesurer 6. Plus précisément, le point I se trouve entre l'image de la source donnée par la zone de plus forte puissance de la surface à mesurer 6 et celle donnée par la zone de plus faible puissance. Dans le cas d'un verre progressif convexe, le point I se trouve entre l'image de la source donnée par la zone de vision de près de la surface 6 et celle donnée par la zone de vision de loin.

La lumière réfléchie par la surface à mesurer traverse l'adaptateur 33, puis le séparateur 32, vers un objectif 34, qui forme approximativement une image de la surface à mesurer 6 sur un écran dépoli 35, à travers un réseau de Ronchi 36. L'intersection du réseau de Ronchi et de l'axe optique est le conjugué optique du point I, qui est lui-même conjugué du point source 30. Une caméra 37, du type caméra mosaïque, reprend l'image constituée sur le dépoli, de la même façon que décrit en référence à la figure 3.

Dans le dispositif de la figure 4, toute la partie en aval du séparateur 32, i.e. l'objectif 34, le réseau 36, le dépoli 35 et la caméra 37, peut être utilisée pour les mesures de toutes les surfaces convexes; de la même façon la partie d'éclairage, i.e. la source 30 et l'optique de focalisation 31, peut servir pour toutes les mesures. Seul l'adaptateur 33 doit le cas échéant être changé en fonction de la puissance de la surface 6 du verre.

La figure 5 montre un dispositif analogue à celui de la figure 4, mais pour la mesure de surfaces concaves. Les éléments identiques sont repérés par les mêmes références numériques. Le dispositif comprend, comme celui de la figure 4, une source 30, une optique de focalisation 31 et un séparateur 32. Le dispositif comprend ensuite un adaptateur 40 similaire à l'adaptateur 33 du montage de la figure 4. L'adaptateur 40 transmet vers la surface concave à étudier, placée au point S, une lumière dont le front d'onde est connu. Le point I est conjugué optique du point source 30 par les optiques 31, 32 et 40. Les positions relatives des points S et I, comme dans le montage de la figure 4, dépendent des puissances minimum et maximum de la surface à mesurer. La lumière réfléchie par la surface concave traverse l'adaptateur 40, le séparateur 32 vers deux objectifs 41 et 42 qui, comme dans le dispositif de la figure 4, forment une image approximative de la surface à mesurer sur un écran dépoli 35 et conjuguent le point I sur un réseau de Ronchi 36. L'image de la pièce 4 sur l'écran dépoli 35 est reprise par une caméra mosaïque 37.

Comme dans le cas du dispositif pour la mesure de surfaces convexes, la partie "imagerie", constituée par les objectifs 41 et 42, le réseau 36, le dépoli 35 et la caméra 37, peut être utilisée pour les mesures de toutes les surfaces concaves. La partie "éclairage" constituée de la source 30, de l'optique de focalisation 31 et du séparateur 32, peut être commune au dispositif de la figure 4 et à celui de la figure 5.

La figure 5bis montre un schéma plus détaillé d'un mode de réalisation d'un dispositif du type de celui de la figure 5, mais pour la mesure en réflexion de surfaces convexes; le dispositif de la figure 5bis est identique à celui de la figure 5, à celà près que l'objectif 42 a été remplacé par un objectif 33' de focale différente, sans modification de sa position dans le dispositif. De la sorte, le montage de la figure 5 peut facilement être transformé en celui de la figure 5bis, pour mesurer des surfaces convexes au lieu de surfaces concaves. Bien entendu, la modification inverse est aussi possible. On peut ainsi à l'aide du même dispositif mesurer tous les types de surfaces, en remplaçant simplement un objectif par un autre.

Les dispositifs décrits en référence aux figures 3, 4, 5 et 5bis sont conçus pour éclairer la surface à mesurer avec une lumière présentant un front d'onde quasi-sphérique. Toutefois, il ne s'agit là que d'un mode de réalisation particulier, le procédé selon l'invention pouvant s'appliquer à tout forme de front d'onde incident.

On décrit maintenant, en référence à la figure 6, le fonctionnement du dispositif selon l'invention. Pour simplifier la description, on ne décrit que le fonctionnement du dispositif de la figure 5, étant entendu que les dispositifs des figures 3, 4 et 5bis fonctionnent de manière analogue. La figure 6 montre un ordinogramme des étapes de la mesure complète des caractéristiques géométriques d'une surface polie; la première étape 50 consiste à fixer le composant optique présentant la surface à mesurer dans les moyens de support. On fixe le composant optique de telle sorte que sa surface à mesurer soit approximativement centrée sur l'axe optique A, et que la normale à la surface au point d'intersection avec l'axe A soit sensiblement confondue avec l'axe A.

Une fois le composant optique fixé, les moyens de support se déplacent, à l'étape 51, de façon à amener la surface sensiblement au voisinage du foyer de l'adaptateur 40. Pour le dispositif de la figure 5, les moyens de support amènent la surface à mesurer au voisinage du point I.

On choisit, en fonction des caractéristiques de la surface à mesurer, la puissance de l'adaptateur 40. Dans la pratique, il suffit de connaître très grossièrement la puissance moyenne de la surface à mesurer (dans le cas d'une mesure en réflexion) ou du composant optique (dans le cas d'une mesure en transmission), qui peut être déterminée par tout moyen connu. Par exemple, dans le cas d'un verre progressif, on connaît a priori la valeur de la base, ce qui permet de choisir la puissance de l'adaptateur 40. Un ensemble de 4 adaptateurs permet de couvrir la gamme courante de puissance, entre 0,50 et 10 dioptries.

A l'étape 52, on procède à un réglage de tilt ou d'orientation, pour assurer l'alignement de la pièce. Par alignement, on entend la détermination de la trajectoire d'un rayon donné issu de la source 30, jusqu'au dépoli 35 ou, ce qui est équivalent, la détermination de la normale à la surface à mesurer au point d'intersection avec l'axe optique. Cet alignement permet de fixer une origine dans le plan du réseau.

Selon l'invention, cet alignement peut être réalisé de façon simple et précise à l'aide d'un faisceau laser 43 émis le long de l'axe optique A du dispositif. A cet effet, on matérialise, lors de la construction du dispositif, l'intersection de l'axe optique avec le dépoli 35, par exemple à l'aide d'un miroir placé au point I dans les moyens de support, perpendiculairement à l'axe optique. L'intersection de l'axe optique avec le dépoli 35 peut ensuite être matérialisée sur l'image fournie par la caméra 37, par exemple grâce à un réticule créé par logiciel.

Pour faciliter les calculs successifs, on propose selon l'invention de corriger sur les moyens de support l'orientation de la surface à mesurer, de façon à ramener l'intersection du rayon laser dans le réticule de l'image de la caméra 37. De la sorte, la normale à la surface à mesurer au point d'intersection avec l'axe optique A est confondue avec celui-ci.

Bien entendu, il serait aussi possible, pour cet alignement, de ne pas modifier l'orientation de la surface à mesurer, mais d'acquérir, sur l'image de la caméra 37, la position du faisceau laser réfléchi.

A l'étape 53, on positionne avec précision la surface à mesurer au foyer de l'adaptateur 40.

A l'étape 54, les moyens de support se déplacent le long de l'axe optique A, de façon à ramener la surface à mesurer en position de mesure. Comme expliqué en référence à la figure 4, la position de mesure est une position pour laquelle le point I, source virtuelle, se trouve entre les rayons ayant traversé la zone de plus forte puissance de la surface à mesurer et les rayons ayant traversé la zone de plus faible puissance. En pratique, la position de mesure est déterminée grâce à la connaissance approximative de la base et de l'addition de puissance de la surface à mesurer.

A l'étape 55, on procède à une première série de mesures, dans une direction perpendiculaire à l'axe optique, et par exemple, dans la direction X perpendiculaire à l'axe optique et comprise dans le plan de la figure 5. Comme décrit dans la littérature, ces mesures consistent à enregistrer les informations d'intensité lumineuse des différents points de la caméra 37, pour diverses positions du réseau de Ronchi. Autrement dit, on enregistre les images correspondant aux franges dues au réseau, en déplaçant à chaque fois le réseau dans son plan, perpendiculairement à la direction des traits.

A l'étape 56, on bascule le réseau de 90° et on recommence une série de mesures, analogue à celle réalisée à l'étape 55.

A l'étape 57, les résultats obtenus dans les étapes 55 et 56 sont transmis aux moyens de calcul, pour être traités comme expliqué plus en détail en référence à la figure 7. De cette façon, on détermine les caractéristiques de la surface à mesurer.

A l'étape 58, les caractéristiques de la surface à mesurer sont connues; toutefois, ces caractéristiques sont connues dans un repère lié au dispositif et non pas à la surface à mesurer elle-même. Autrement dit, les caractéristiques déterminées selon l'invention sont connues par rapport aux moyens de support de la surface à mesurer. Il importe donc, pour pouvoir utiliser les résultats, d'effectuer un changement de repère pour connaître les caractéristiques de la surface dans son propre repère. Dans le cas d'un verre optique, ce repère est généralement constitué de gravures sur la surface, par exemple de deux microcercles gravés.

Selon l'invention, le changement de repère peut se faire en utilisant des moyens de support de la pièce à mesurer qui sont susceptibles de se déplacer, non seulement le long de l'axe optique, mais aussi dans le plan orthogonal à l'axe optique. Par exemple, on monte les moyens de support sur deux platines de translation motorisées, se déplaçant parallèlement aux lignes et aux colonnes de la caméra 37. Le changement de repère peut alors être réalisé grâce au faisceau laser qui matérialise l'axe optique du dispositif et qui a déjà été mentionné dans la description de l'étape 52.

Pour le changement de repère, on commence par ramener la surface à mesurer au foyer de l'adaptateur 40. Ceci se fait, comme à l'étape 51 par déplacement des moyens de support le long de l'axe optique. On déplace ensuite la pièce à mesurer, dans le plan perpendiculaire à l'axe optique, et éventuellement le long de l'axe optique, de manière à amener une gravure au foyer de l'adaptateur 40. L'image de la gravure donnée par l'adaptateur 40 est reprise par la caméra 44 sur laquelle on a visualisé avec un réticule l'intersection de l'axe optique avec le plan du CCD de la caméra.

Quand l'image (de la gravure) fournie par la caméra 44 est centrée sur le réticule, on note les déplacements effectués dans le plan perpendiculaire à l'axe optique. On procède ensuite de façon analogue pour les autres gravures.

De la sorte, on connaît la position des gravures, dans un repère lié au dispositif de mesure. On connaît par ailleurs, grâce à la procédure d'alignement, la normale de la surface à mesurer à son intersection avec l'axe optique. Ces éléments permettent de réaliser un simple changement de repère, de façon à fournir en sortie les caractéristiques de la surface à mesurer, dans un repère lié aux gravures de celle-ci.

Après l'étape 58, on dispose des caractéristiques de la surface à mesurer, dans un repère lié à cette surface. On peut donc passer à la mesure d'une autre surface.

La description du fonctionnement du dispositif, faite en référence à la figure 5, s'étend, mutatis mutandis, aux dispositifs des figures 3 et 4.

La figure 7 montre un ordinogramme des étapes de mesure et de calcul dans un mode de mise en oeuvre du procédé selon l'invention. Dans la suite de la description, on a utilisé pour la facilité de l'explication un repère orthonormé, dont l'axe z est confondu avec l'axe optique du système. Dans un tel repère, la surface à mesurer est représentable par une fonction z = f(x,y).

A l'étape 60, les images obtenues aux étapes 55 et 56 permettent de calculer par détection de phase la position de l'intersection de chaque rayon lumineux dans le plan du réseau.

Les grandissements transversaux de la caméra 37 étant connus, on peut en déduire la position de l'intersection de chaque rayon lumineux avec le plan du dépoli; connaissant parfaitement la distance entre le réseau et le dépoli, on en déduit l'équation de chaque rayon lumineux.

On transporte alors, par calcul optique, les rayons lumineux de l'espace où ils ont été mesurés à l'espace de la pièce mesurée. Ce transport des rayons permet de simplifier et d'accélérer l'étape de calcul du procédé selon l'invention. Ceci apparaîtra plus clairement dans la suite lors de la description de la fonction de mérite utilisée dans l'étape de calcul selon l'invention.

Selon un premier mode de mise en oeuvre de l'invention, les étapes de calcul 61 à 64 permettent de déterminer les caractéristiques géométriques du composant optique à mesurer, sous forme d'une représentation tridimensionnelle de la surface à mesurer.

A l'étape 61, on procède à l'initialisation d'une surface résultat par une surface simple de départ S_{D}, c'est-à-dire que l'on se donne une forme de surface.

A l'étape 62, on calcule, pour cette surface résultat, et donc, la première fois, pour la surface simple de départ SD la valeur d'une fonction de mérite représentative des variations induites dans le système de mesure par le remplacement de la surface à mesurer par la surface résultat.

Autrement dit, on compare d'une part la situation réelle dans le système de mesure, et d'autre part la situation qu'aurait créé la surface résultat, si elle avait été placée dans le système de mesure à la place de la surface à mesurer. Le calcul des effets de la surface résultat est possible, car on connaît à priori toutes les caractéristiques du système de mesure, seule la surface à mesurer étant inconnue. On peut donc ainsi simuler dans le système de mesure la présence de la surface résultat.

La fonction de mérite est choisie de façon à présenter un minimum de valeur nulle lorsque la surface résultat est exactement égale à la surface à mesurer. Un exemple de fonction de mérite est décrit plus en détail dans la suite.

A l'étape 63, on compare la valeur de la fonction de mérite ainsi calculée à une première valeur de seuil prédéterminée. Si la valeur est supérieure à cette valeur de seuil, on passe à l'étape 64, et sinon, on considère que la surface résultat ainsi obtenue est une bonne approximation de la surface à mesurer. On évite par cette comparaison de poursuivre les calculs si l'on a rapidement obtenu par la surface résultat une représentation de la surface à mesurer, avec une précision suffisante.

A l'étape 64, on procède à une optimisation de la surface résultat. En effet, la fonction de mérite est une fonction de la surface résultat. De ce fait, il est possible d'optimiser la surface résultat, par une méthode d'optimisation, comme par exemple une optimisation par la méthode des moindres carrés. On obtient ainsi une nouvelle surface résultat, sous la forme d'une surface intermédiaire S_{I}.

Cette surface S_{I} représente une approximation de la surface à mesurer, qui peut être suffisante dans certains modes de mise en oeuvre de l'invention. Selon l'invention, on peut aussi procéder à une pluralité d'étapes d'optimisation. Dans ce cas, après l'étape 64, on repasse à l'étape 62, avec la surface S_{I} obtenue.

On calcule de nouveau la valeur de la fonction de mérite pour la surface résultat ou surface intermédiaire en cours; à l'étape 63, on peut non seulement comparer la valeur de la fonction de mérite à la première valeur de seuil prédéterminée, mais aussi la comparer à la valeur obtenue à l'étape précédente. Si la différence entre les valeurs obtenues entre deux étapes successives est peu importante, i.e. si elle est inférieure à une seconde valeur de seuil prédéterminée, on considère que la surface S_{I} est une représentation de la surface à mesurer avec une précision suffisante. Cela signifie en effet que la variation entre les surfaces résultats calculées dans deux étapes successives est faible.

On décrit maintenant à titre d'exemple une fonction de mérite utilisable dans le procédé selon l'invention. Cette fonction de mérite s'obtient en considérant une pluralité de rayons lumineux réfléchis ou transmis par la surface à mesurer. Pour chacun de ces rayons lumineux, on calcule, à l'aide d'un programme de tracé de rayons, le rayon lumineux théorique qui, en arrivant sur la surface résultat, i.e. sur la surface simple de départ S_{D} ou sur une surface intermédiaire S_{I}, serait réfléchi ou transmis de la même façon. Autrement dit, on considère un rayon lumineux en aval de la surface à mesurer et, par un programme de tracé de rayons, on "remonte" le trajet qu'aurait suivi ce rayon lumineux, si la surface à mesurer avait été remplacée par la surface simple de départ SD ou une surface intermédiaire S_{I}. La connaissance des différents éléments du dispositif de mesure permet de calculer le trajet du rayon lumineux S_{D} jusqu'au plan de la source.

Comme mentionné plus haut, il est avantageux d'avoir transporté, par calcul optique, les rayons lumineux de l'espace où ils ont été mesurés à l'espace de la pièce mesurée. De ce fait, lors du calcul de la fonction de mérite, on "remonte" le trajet d'un rayon lumineux, non pas depuis l'espace où il a été mesuré, mais depuis l'espace immédiatement en aval de la surface à mesurer.

Dans le cas où l'on utilise, dans le dispositif de mesure, une source ponctuelle, on peut "remonter" le rayon lumineux jusque dans le plan de la source. On calcule dans ce plan la distance entre le rayon lumineux et le centre de la source ponctuelle.

Pour obtenir la fonction de mérite, on additionne, pour la pluralité de rayons, les carrés des distances ainsi calculées. Cette fonction de mérite est ainsi représentative des écarts locaux entre la surface à mesurer et la surface résultat (surface simple de départ S_{D} ou surface intermédiaire S_{I}), au niveau des points de réflexion ou de transmission de chaque rayon lumineux de la pluralité de rayons.

Bien entendu, on peut utiliser tout autre type de fonction de mérite, et en particulier, on peut calculer les écarts entre les rayons dans un autre plan que celui de la source.

Pour représenter la surface résultat, la surface simple de départ ou les surfaces intermédiaires, on peut avantageusement utiliser une fonction qui est une combinaison linéaire d'une famille de fonctions orthogonales. Dans ce cas, la fonction de mérite est une fonction des différents coefficients de la combinaison linéaire. L'optimisation peut alors être réalisée en faisant varier les différents coefficients, par exemple par une méthode du type moindres carrés.

L'utilisation d'une famille de fonctions orthogonales est particulièrement avantageuse si le procédé selon l'invention présente une pluralité d'étapes d'optimisation. De ce fait, si dans une étape d'optimisation, on rajoute des fonctions à la combinaison linéaire, on peut supposer, du fait de l'orthogonalité des différentes fonctions, que les coefficients de la combinaison linéaire précédemment calculés ne varieront pas ou très peu.

Ainsi, on peut utiliser pour représenter la surface résultat, des polynomes de Zernike, qui sont orthogonaux sur un disque. La surface simple de départ peut alors être initialisée par une parabole, représentée par un polynome de Zernike de degré 2. A l'étape d'initialisation, la surface à mesurer est une parabole et est donc représentée par les polynomes de Zernike de degré 0, 1 et 2: l'optimisation se fait sur trois coefficients. On effectue une pluralité d'étapes d'optimisation, en restant sur une fonction représentée par des polynomes de degré 0, 1 et 2, tant qu'à chaque étape, la valeur de la fonction de mérite varie plus qu'une troisième valeur seuil prédéterminée. Lorsque la valeur de la fonction de mérite ne varie plus que d'une quantité inférieure à la troisième valeur seuil, on complète la fonction représentant la surface intermédiaire, par les polynomes de Zernike de degré 3, 4 et 5. On procède de nouveau au calcul de la fonction de mérite (étape 62), puis à l'étape 63, on détermine si l'approximation obtenue est suffisante par comparaison de la valeur de la fonction de mérite avec la première valeur seuil mentionnée plus haut. Dans le cas d'une surface relativement régulière, on peut déjà obtenir ainsi une représentation satisfaisante.

On procède ensuite de la même façon, en augmentant progressivement le degré maximal à 10, 15 et 20.

L'utilisation selon l'invention d'une pluralité d'étapes d'optimisation à des degrés croissants présente d'une part l'avantage que l'on peut arrêter à tout moment les calculs si la valeur de la fonction de mérite est inférieure à la première valeur seuil prédéterminée, comme expliqué ci-dessus. Elle présente d'autre part l'avantage d'accélérer les calculs, qui sont beaucoup plus rapides pour des degrés faibles.

Elle permet de plus de converger vers une solution présentant un bruit réduit.

La description qui précède s'étend sans problème à la mesure de la structure optique d'un composant optique, et par exemple à la mesure de la répartition d'indice d'un composant optique à gradient d'indice, c'est-à-dire d'un composant constitué d'un matériau à indice variable délimité par deux dioptres connus.

Selon un deuxième mode de mise en oeuvre de l'invention, l'étape de calcul permet de déterminer les caractéristiques de la surface à analyser sous forme de cartes de courbures principales de ladite surface.

A l'étape 65, on commence par calculer en une pluralité de points les dérivées des informations obtenues dans l'espace du système optique lors de la phase de mesure.

A l'étape 66, on détermine à partir de ces dérivées les courbures du front d'onde après réflexion sur la surface à mesurer ou transmission par ladite surface.

A l'étape 67, connaissant la forme du front d'onde incident, on détermine les courbures principales de la surface à mesurer.

## Revendications

1. Procédé de mesure absolue de la structure géométrique ou optique d'un composant optique (4), comprenant les étapes consistant à :
- éclairer ledit composant optique par une lumière incidente, dont le front d'onde est connu,
- mesurer dans un plan donné les cartes de pentes du front d'onde de ladite lumière après réflexion sur ledit composant optique ou transmission par ledit composant optique,
caractérisé en ce qu'il comporte en outre au moins une procédure de calcul consistant à déduire de ladite mesure des cartes de pentes la structure géométrique ou optique dudit composant optique, sans connaissance préalable de la structure géométrique ou optique théorique dudit composant optique.

2. Procédé selon la revendication 1, caractérisé en ce que l'étape consistant à mesurer les cartes de pentes du front d'onde de ladite lumière après réflexion sur ledit composant optique ou transmission par ledit composant optique, s'effectue en déterminant, par une méthode déflectométrique, les trajets d'une pluralité de rayons de ladite lumière dans un espace image du composant optique à mesurer.

3. Procédé selon la revendication 2, caractérisé en ce que ladite méthode déflectométrique est une méthode dite "géométrique", par interposition d'un réseau de Ronchi sur le trajet de la lumière réfléchie sur ledit composant optique ou transmise par ledit composant optique.

4. Procédé selon la revendication 2 ou 3, caractérisé en ce qu'il comprend en outre une étape de transport desdits rayons dans l'espace du composant optique à mesurer, par calcul optique.

5. Procédé selon l'une des revendications 1 à 4, caractérisé en ce que ladite procédure de calcul consiste à déterminer la structure géométrique d'une surface du composant optique à mesurer, et en ce que ladite propédure de calcul comprend:
- une étape (61) d'initialisation d'une surface résultat par une surface de départ simple S_{D},
- au moins une étape d'optimisation, impliquant:
- un calcul (62) de la valeur d'une fonction de mérite représentative des variations induites par le remplacement de la surface du composant optique à mesurer par ladite surface résultat et
- une minimisation (64) de ladite valeur, en faisant varier ladite surface résultat, variation qui s'exprime sous forme d'au moins une surface intermédiaire S_{I}.

6. Procédé selon la revendication 5, caractérisé en ce que ladite surface résultat, ladite surface simple S_{D} et la ou lesdites surfaces intermédiaires S_{I} sont représentées par une combinaison linéaire d'une famille de fonctions orthogonales.

7. Procédé selon l'une des revendications 1 à 4, caractérisé en ce que ladite procédure de calcul consiste à déterminer la répartition d'indice du composant optique à mesurer, et en ce que ladite étape de calcul comprend:
- une étape d'initialisation (61) d'une répartition d'indice résultat par une répartition d'indice de départ simple N_{D},
- au moins une étape d'optimisation, impliquant:
- un calcul (62) de la valeur d'une fonction de mérite représentative des variations induites par le remplacement de la répartition d'indice du composant optique à mesurer par ladite répartition d'indice résultat, et
- une minimisation (64) de ladite valeur, en faisant varier ladite répartition d'indice résultat, variation qui s'exprime sous forme d'au moins une répartition d'indice intermédiaire N_{I}.

8. Procédé selon la revendication 7, caractérisé en ce que ladite répartition d'indice résultat, ladite répartition d'indice de départ simple N_{D} et la ou lesdites répartitions d'indice intermédiaires N_{I} sont représentées par une combinaison linéaire d'une famille de fonctions orthogonales.

9. Procédé selon l'une des revendications 5 à 8, caractérisé en ce que ladite procédure de calcul comporte une pluralité d'étapes d'optimisation (62, 64).

10. Procédé selon l'une des revendications 6, 8 ou 9, caractérisé en ce que lesdites fonctions orthogonales sont des polynomes, et en ce que, le degré maximum des polynomes de ladite combinaison linéaire dans une étape d'optimisation (62, 64) est supérieur ou égal au degré maximum des polynomes de ladite combinaison dans l'étape d'optimisation précédente (62, 64).

11. Procédé selon l'une des revendications 5 à 10, caractérisé en ce que la minimisation (64) de la valeur de la fonction de mérite s'effectue par la méthode des moindres carrés.

12. Procédé selon l'une des revendications 5 à 11, caractérisé en ce que l'on utilise une source quasi-ponctuelle et en ce que le calcul de la valeur de la fonction de mérite s'effectue:
- en calculant, pour chaque rayon d'une pluralité de rayons de ladite lumière, après réflexion sur ledit composant optique ou transmission par ledit composant optique,
- le rayon lumineux incident, qui, en arrivant sur ladite surface résultat ou ladite répartition d'indice résultat calculée lors du processus d'optimisation, serait réfléchi ou transmis dans la direction du rayon mesuré,
- dans le plan de la source de la lumière incidente ou dans un plan conjugué de ce plan, la distance entre le point d'impact dudit rayon incident dans ce plan et le centre de ladite source quasi-ponctuelle,
- en additionnant, pour ladite pluralité de rayons, les carrés de la distance ainsi calculée pour chacun des rayons.

13. Procédé selon l'une quelconque des revendications 1 à 4, caractérisé en ce que ladite procédure de calcul consiste à déterminer les caractéristiques d'une surface du composant optique à analyser sous forme de cartes de courbures principales, et en ce que ladite procédure de calcul comprend:
- une étape (65) de calcul des dérivées, dans plusieurs directions, des cartes de pentes du front d'onde de la lumière après réflexion sur ledit composant optique ou transmission par ledit composant optique.
- une étape (66) de calcul à partir desdites dérivées, des courbures du front d'onde de la lumière après réflexion sur ledit composant optique ou transmission par ledit composant optique,
- une étape (67) de calcul d'une carte des courbures principales de la surface du composant optique à mesurer, à partir des courbures ainsi calculées, et connaissant le front d'onde de la lumière incidente sur le composant optique.

14. Dispositif pour la mise en oeuvre du procédé selon l'une quelconque des revendications précédentes, comprenant:
- des moyens (1; 20, 21, 22; 30, 31, 32, 33; 30, 31, 32, 40) d'éclairage du composant optique à mesurer (4) par une lumière dont le front d'onde est connu,
- des moyens de support du composant optique à mesurer (4),
caractérisé en ce qu'il comprend en outre:
- des moyens (2; 12, 2; 23, 24, 25, 26; 33, 34, 35, 36, 37; 40, 41, 42, 35, 36, 37) de mesure des pentes du front d'onde de ladite lumière après réflexion sur ledit composant optique ou transmission par ledit composant optique, et
- des moyens de calcul (3) susceptibles de recevoir les résultats desdits moyens de mesure.

15. Dispositif selon la revendication 14, caractérisé en ce que lesdits moyens de mesure comprennent un réseau de Ronchi (25, 36), un écran dépoli (24, 35) et une caméra CCD (26, 37).

16. Dispositif selon la revendication 14, caractérisé en ce que lesdits moyens de mesure comprennent un réseau de Ronchi (25, 36), et une caméra CCD (26, 37).

17. Dispositif selon l'une des revendications 14 à 16, caractérisé en ce que les moyens d'éclairage de la surface à mesurer comprennent une source quasi-ponctuelle (20, 30) et un système d'imagerie de cette source.

18. Dispositif selon l'une des revendications 14 à 17, caractérisé en ce que les moyens de calcul comprennent un programme de tracé de rayons.

19. Dispositif selon l'une des revendications 14 à 18, caractérisé en ce qu'il comprend en outre un rayon laser matérialisant l'axe optique du dispositif.

20. Dispositif selon l'une des revendications 14 à 19, caractérisé en ce que lesdits moyens de support sont susceptibles de se déplacer le long de l'axe optique du dispositif, ou dans un plan orthogonal à celui-ci.

## Patentansprüche

1. Verfahren zum absoluten Messen der geometrischen oder optischen Struktur eines optischen Bauteiles (4), umfassend die folgenden Schritte:
- Beleuchten des optischen Bauteiles mit einem einfallenden Licht, dessen Wellenfront bekannt ist,
- Messen der Neigungskarten der Wellenfront, in einer gegebenen Ebene, des Lichtes nach Reflektion an dem optischen Bauteil oder Transmission durch das optische Bauteil
dadurch gekennzeichnet, daß das Verfahren des weiteren zumindest eine Berechnungsprozedur umfaßt, welche darin besteht, die geometrische oder optische Struktur des optischen Bauteiles von der Messung der Neigungskarten abzuleiten, und zwar ohne vorherige Kenntnis der theoretischen geometrischen oder optischen Struktur des optischen Bauteiles.

2. Verfahren nach Anspruch 1, dadurch gekennzeichnet, daß der Schritt des Messens der Neigungskarte der Wellenfront des Lichtes nach Reflektion an dem optischen Bauteil oder nach Transmission durch das optische Bauteil durchgeführt wird, indem die Pfade einer Mehrzahl von Strahlen des Lichtes in einem Bildraum des zu messenden optischen Bauteiles über ein Ablenkungsmeßverfahren bestimmt werden.

3. Verfahren nach Anspruch 2, dadurch gekennzeichnet, daß das Ablenkungsmeßverfahren ein "geometrisches" ist, durch Zwischenschaltung eines Ronchi-Netzes in den Pfad des Lichtes, welches an dem optischen Bauteil reflektiert wird, oder nach Transmission durch das optische Bauteil.

4. Verfahren nach Anspruch 2 oder 3, dadurch gekennzeichnet, daß es des weiteren aufweist einen Transport- bzw. Transformationsschritt der Strahlen in dem Raum des zu messenden optischen Bauteiles, und zwar über optische Berechnung.

5. Verfahren nach einem der Ansprüche 1 bis 4, dadurch gekennzeichnet, daß die Berechnungsprozedur darin besteht, die geometrische Struktur einer Fläche des zu messenden optischen Bauteiles zu bestimmen, und daß die Berechnungsprozedur umfaßt:
- einen Initialisierungsschritt (61) einer Ergebnisfläche durch eine einfache Ausgangsfläche S_{D},
- zumindest einen Optimierungsschritt, mit:
- einer Berechnung (62) des Wertes einer Bandfunktion, welche repräsentativ für Veränderungen ist, welche durch die Ersetzung der Fläche des zu messenden optischen Bauteiles durch die Ergebnisfläche induziert ist und
- einer Minimierung (64) des Wertes, indem die Ergebnisfläche verändert wird, wobei die Veränderung ausgedrückt wird in der Form von zumindest einer intermediären Fläche S_{I}.

6. Verfahren nach Anspruch 5, dadurch gekennzeichnet, daß die Ergebnisfläche, die einfache Fläche S_{D} und die intermediäre Fläche bzw. intermediären Flächen S_{I} dargestellt sind durch eine Linearkombination einer Familie von orthogonalen Funktionen.

7. Verfahren nach einem der Ansprüche 1 bis 4, dadurch gekennzeichnet, daß die Berechnungsprozedur darin besteht, die Verteilung von Indizes des zu messenden optischen Bauteiles zu bestimmen, und daß der Berechnungsschritt umfaßt:
- einen Initialisierungsschritt (61) einer Ergebnisindizesverteilung durch eine einfache Anfangsindizesverteilung N_{D},
- zumindest einen Optimierungsschritt mit:
- einer Berechnung (62) des Wertes einer Bandfunktion, welche repräsentativ für Veränderungen ist, welche durch die Ersetzung der Indizesverteilung des zu messenden optischen Bauteiles durch die Ergebnisindizesverteilung induziert ist, und
- einer Minimierung (64) des Wertes, indem die Ergebnisindizesverteilung verändert wird, wobei die Veränderung ausgedrückt wird in der Form von zumindest einer intermediären Indizesverteilung N_{I}.

8. Verfahren nach Anspruch 7, dadurch gekennzeichnet, daß die Ergebnisindizesverteilung, die einfache Anfangsindizesverteilung N_{D} und die intermediäre Indizesverteilung oder die intermediären Indizesverteilungen N_{I} dargestellt sind durch eine Linearkombination einer Familie von orthogonalen Funktionen.

9. Verfahren nach einem der Ansprüche 5 bis 8, dadurch gekennzeichnet, daß die Berechnungsprozedur mehrere Optimierungsschritte (62, 64) umfaßt.

10. Verfahren nach einem der Ansprüche 6, 8 oder 9, dadurch gekennzeichnet, daß die orthogonalen Funktionen Polynome sind, und daß die maximale Ordnung der Polynome der Linearkombination in einem Optimierungsschritt (62, 64) größer oder gleich der maximalen Ordnung der Polynome der Kombination in dem vorangegangenen Optimierungsschritt (62, 64) ist.

11. Verfahren nach einem der Ansprüche 5 bis 10, dadurch gekennzeichnet, daß die Minimierung (64) des Wertes der Bandfunktion durch das Verfahren der kleinsten Quadrate durchgeführt wird.

12. Verfahren nach einem der Ansprüche 5 bis 11, dadurch gekennzeichnet, daß eine quasi-punktuelle Quelle verwendet wird, und daß die Berechnung des Wertes der Bandfunktion durchgeführt wird, indem:
- für jeden Strahl eine Mehrzahl von Strahlen des Lichtes nach Reflektion an dem optischen Bauteil oder Transmission durch das optische Bauteil berechnet wird:
- der Einfallslichtstrahl, welcher beim Erreichen der während dem Optimierungsschritt berechneten Ergebnisfläche oder Ergebnisindizesverteilung reflektiert oder transmittiert würde in der Richtung des gemessenen Strahles,
- in der Ebene der Quelle des einfallenden Lichtes oder in einer konjugierten Ebene dieser Ebene der Abstand zwischen dem Auftreffpunkt des einfallenden Strahles in dieser Ebene und der Mitte der quasi-punktuellen Quelle,
- für die Mehrzahl von Strahlen die Quadrate des somit für jeden der Strahlen berechneten Abstandes addiert werden.

13. Verfahren nach einem der Ansprüche 1 bis 4, dadurch gekennzeichnet, daß die Berechnungsprozedur darin besteht, die Merkmale einer Fläche des zu analysierenden optischen Bauteiles in der Form von Hauptkrümmungskarten zu bestimmen, und daß die Berechnungsprozedur umfaßt:
- einen Schritt (65) der Berechnung von Ableitungen in mehreren Richtungen der Neigungskarten der Wellenfront des Lichtes nach Reflektion an dem optischen Bauteil oder Transmission durch das optische Bauteil,
- einen Schritt (66) der Berechnung, ausgehend von den Ableitungen der Krümmungen der Wellenfront des Lichtes nach Reflektion an dem optischen Bauteil oder Transmission durch das optischen Bauteil,
- einen Schritt (67) der Berechnung einer Karte der Hauptkrümmungen der Fläche des zu messenden optischen Bauteiles, ausgehend von den somit berechneten Krümmungen und unter Kenntnis der Wellenfront des einfallenden Lichtes auf das optische Bauteil.

14. Vorrichtung zum Durchführen des Verfahrens nach einem der vorangegangenen Ansprüche, umfassend:
- eine Einrichtung (1; 20, 21, 22; 30, 31, 32, 33; 30, 31, 32, 40) zur Beleuchtung des zu messenden optischen Bauteiles (4) durch ein Licht, dessen Wellenfront bekannt ist,
- eine Stützeinrichtung für das zu messende optische Bauteil (4),
dadurch gekennzeichnet, daß die Vorrichtung des weiteren umfaßt:
- eine Einrichtung (2; 12, 2; 23, 24, 25, 26; 33, 34, 35, 36, 37; 40, 41, 42, 35, 36, 37) zum Messen der Neigungen der Wellenfront des Lichtes nach Reflektion an dem optischen Bauteil oder Transmission durch das optische Bauteil, und
- eine Berechnungseinrichtung (3), welche in der Lage ist, die Ergebnisse der Meßeinrichtung zu empfangen.

15. Vorrichtung nach Anspruch 14, dadurch gekennzeichnet, daß die Meßeinrichtung ein Ronchi-Netz (25, 36), einen Mattenschirm (24, 35) und eine CCD Kamera (26, 37) umfaßt.

16. Vorrichtung nach Anspruch 14, dadurch gekennzeichnet, daß die Meßeinrichtung ein Ronchi-Netz (25, 36) und eine CCD Kamera (26, 37) umfaßt.

17. Vorrichtung nach einem der Ansprüche 14 bis 16, dadurch gekennzeichnet, daß die Einrichtung zum Beleuchten der zu messenden Fläche eine quasi-punktuelle Quelle (20, 30) und ein Bildsystem dieser Quelle umfaßt.

18. Vorrichtung nach einem der Ansprüche 14 bis 17, dadurch gekennzeichnet, daß die Berechnungseinrichtung ein Strahlenspurprogramm umfaßt.

19. Vorrichtung nach einem der Ansprüche 14 bis 18, dadurch gekennzeichnet, daß sie des weiteren einen Laserstrahl umfaßt, welcher die optische Achse der Vorrichtung bildet.

20. Vorrichtung nach einem der Ansprüche 14 bis 19, dadurch gekennzeichnet, daß die Stützeinrichtung in der Lage ist, entlang der optischen Achse der Vorrichtung oder in einer Ebene, welche orthogonal dazu verläuft, versetzt zu werden.

## Claims

1. A method for absolute measurement of a geometrical or optical structure of an optical component comprising the steps consisting of:
- illuminating said optical component with incident light having a known wavefront,
- measuring, in a given plane, the maps of the wavefront slopes of said light, after reflection at said optical component or transmission by said optical component,
- characterized in that it further comprises at least one computational step consisting in calcualting, from said measurement, slope maps of the geometrical or optical structure of said optical component, without prior knowledge of the theoretical geometrical or optical structure of said optical component.

2. Method according to claim 1, characterized in that the step consisting in measuring the slope maps of the wavefront of said light after reflection at said optical component or transmission by said optical component is carried out by determining, using a deflectometric method, the paths of the plurality of rays of said light in an image space of the optical component being measured.

3. Method according to claim 2, characterized in that said deflectometric method is a geometric method employing the insertion of a Ronchi grating on the path of the light reflected at said optical component or transmitted by said optical component.

4. Method according to claim 2 or 3, characterized in that it further comprises a step consisting in transposing said rays into the space of the optical component to be measured, using optical calculation.

5. Method according to one of claims 1 to 4, characterized in that said calculating procedure consists of determining the geometrical structure of a surface of the optical component to be measured and in that it further comprises:
- a step (61) in which a result surface is initialized using a simple starting surface S_{D},
- at least one optimization step involving:
- calculation (62) of the value of a merit function representative of the variations induced by replacement of the surface of the optical component to be measured by said result surface and,
- minimization (64) of said value by varying said result surface, said variation being expressed in the form of at least one intermediate surface S_{I}.

6. Method according to claim 5, characterized in that said result surface, said simple surface s_{D} and the one or several intermediate surfaces S_{I} are represented by a linear combination of a family of orthogonal functions.

7. Method according to one of claims 1 to 4, characterized in that said calculating procedure consists in determining the refractive index distribution of the optical component to be measured, and in that said calculation step comprises:
- an initialization step (61) for a result refractive index distribution, using a simple starting refractive index distribution N_{D},
- at least one optimization step comprising:
- calculation (62) of the value of a merit function representative of the variations induced by replacement of the refractive index distribution of the optical component to be measured by said result refractive index distribution, and
- minimization (64) of said value by varying said result refractive index distribution, said variation being expressed in the form of at least one intermediate refractive index distribution N_{I}.

8. Method according to claim 7, characterized in that said result refractive index distribution, said simple starting refractive index distribution N_{D} and the one or several intermediate refractive index distributions N_{I} are represented by a linear combination of a family of orthogonal functions.

9. Method according to one of claims 5 to 8, characterized in that said calculation procedure includes a plurality of optimization steps (62, 64).

10. Method according to one of claims 6, 8 or 9, characterized in that said orthogonal functions are polynomials and in which the maximum degree of the polynomials of said linear combination in an optimization step (62, 64) is higher than or equal to the maximum degree of the polynomials of said combination in the preceding optimization step (62, 64).

11. Method according to one of claims 5 to 10, characterized in that said minimization (64) of the value of said merit function is carried out using the least squares method.

12. Method according to one of claims 5 to 11, characterized in that a quasi-point source is employed and in which calculation of the value of the merit function is carried out:
- by calculating, for each ray of a plurality of rays of said light, after reflection at said optical component or transmission by said optical component:
- the incident luminous ray which, upon arriving at said result surface or said result refractive index distribution calculated in said optimization process, would be reflected or transmitted in the direction of the measured ray,
- the distance, in the plane of the source of the incident light or in a plane conjugate with said plane, between the point of impact of said incident ray in said plane and the center of said quasi-point source,
- by adding, for said plurality of rays, the squares of the distance thus calculated for each one of said rays.

13. Method according to any one of claims 1 to 4, characterized in that said calculating procedure consists in determining the characteristics of a surface of the optical component to be analyzed in the form of maps of its principal curvatures, and in that said calculating procedure comprises:
- a step (65) in which derivatives are calculated, in several directions, of the maps of the slopes of the wavefront of said light after reflection at said optical component or transmission by said optical component,
- a calculation step (66) starting from said derivatives, for the curvatures of the wavefront of the light after reflection at said optical component or transmission by said optical component,
- a step (67) for computing a map of the principal curvatures of the surface of the optical component to be measured, starting from the curvatures thus calculated, and knowing the wavefront of the light incident on the optical component.

14. Device for carrying out the method according to any one of the preceding claims, comprising:
- means (1; 20, 21, 22; 30, 31, 32, 33; 30, 31, 32, 40) for illuminating the optical component to be measured (4) with light having a known wavefront,
- means for supporting the optical component to be measured (4),
characterized in that it further comprises:
- means (2; 12, 2; 23, 24, 25, 26; 33, 34, 35, 36, 37; 40, 41, 42, 35, 36, 37) for measuring the slopes of the wavefront of said light after reflection at said optical component or transmission by said optical component, and
- calculating means (3) adapted to receive the results from said measuring means.

15. Device according to claim 14, characterized in that said measuring means comprise a Ronchi grating (25, 36) , a mat screen (24, 35) and a charge-coupled-device camera (26, 37).

16. Device according to claim 14, characterized in that said measurement means comprise a Ronchi grating (25, 36) and a charge-coupled-device camera (26, 37).

17. Device according to one of claims 14 to 16, characterized in that said means for illuminating the surface to be measured comprise a quasi-point source (20, 30) and a system for imaging said source.

18. Device according to one of claims 14 to 17, characterized in that said calculating means comprise a ray tracing programme.

19. Device according to one of claims 14 to 18, characterized in that it further comprises a laser beam used to materialise the optical axis of said device.

20. Device according to any one of claims 14 to 19, characterized in that said support means are adapted to be displaceable along the optical axis of said device or in a plane orthogonal thereto.
